Europäisches Patentamt
European Patent Office
Office européen des brevets

(19)

(11) Publication number: **0 199 521 A2**

(12) **EUROPEAN PATENT APPLICATION**

(21) Application number: 86302756.1

(22) Date of filing: 14.04.86

(51) Int. Cl.⁴: A 01 N 43/10
C 02 F 1/50
//(A01N43/10, 37:34)

(30) Priority: 14.04.85 JP 78917/85

(43) Date of publication of application: 29.10.86 Bulletin 86/44

(84) Designated Contracting States: DE FR GB

(71) Applicant: Takeda Chemical Industries, Ltd.
27, Doshomachi 2-chome Higashi-ku
Osaka-shi Osaka, 541(JP)

(84) Designated Contracting States: DE FR GB

(71) Applicant: SOMAR CORPORATION
11-2, Ginza 4-chome Chuo-ku
Tokyo(JP)

(84) Designated Contracting States: DE

(72) Inventor: Mitsui, Susumu
Charme-Kitakoshigaya B-303 1006-3, Oaza-ohfusa
Koshigaya Saitama 343(JP)

(72) Inventor: Kurose, Shigeru
1367-4, Aza-Kainotani Benten-cho
Souka Saitama 340(JP)

(72) Inventor: Saimoto, Hiroshi
6-305, 11 Hikonari 3-chome
Misato Saitama 341(JP)

(74) Representative: Myerscough, Philip Boyd et al,
J.A.Kemp & Co. 14, South Square Gray's Inn
London, WC1R 5EU(GB)

(54) **An antimicrobial composition.**

(57) A composition containing 3,3,4,4-tetrachlorotetrahydrothiophene-1,1-dioxide and at least one cyanoacetamide compound of formula (I):

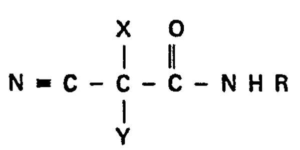

(I)

wherein X is halogen, Y is halogen or hydrogen and R is hydrogen or lower alkyl effectively inhibits the growth of microbes in, for example, water systems in the pulp and paper industries.

EP 0 199 521 A2

AN ANTIMICROBIAL COMPOSITION

BACKGROUND OF THE INVENTION

This invention relates to an antimicrobial composition which comprises a cyanoacetamide compound represented by the formula (I) given hereinbelow and 3,3,4,4-tetrachlorotetrahydrothiophene-1,1-dioxide (referred to as compound (II) hereinafter), the synergistic effect exhibited by these two compounds being utilized for the purpose of this invention. Especially, this antimicrobial composition can be effectively used in industrial water systems for making pulp and paper.

Hitherto, harmful microorganisms are liable to grow in various water systems such as effluents from paper-making process in pulp and paper industries, cooling water recycled in various industries, and furthermore, in production of water paints, emulsion paints, coating color solutions for paper, latex, textile printing pastes, leather, etc. and this causes decrease in productivity and quality of products.

Particularly, in water systems in pulp and paper industries, slime is formed due to growth of microorganisms, for example, bacteria, fungi and yeasts and the slime sticks to water channel through which pulp slurry flows, especially rough wall surface with which the slurry contacts, and chests, flow boxes, transporting pipes, and other parts where the pulp slurry flows slowly and stagnates. This slime often comes off to cause breakage of paper at dryer part or slime spots on paper products and further causes various difficulties due to the growth of microorganisms.

Such difficulties bring about significant problems where high-speed machines are used and lead to significant reduction of productivity and economical loss.

Furthermore, also in recycling system of cooling water in metal working fluids, microorganisms grow to deteriorate the cooling efficiency and the emulsifiable

property of the metal working fluids and besides emit a bad smell in the working atmosphere. These are resulting in deterioration of working environment and are not desired for public health.

Other problems caused by growth of harmful microorganisms are also seen in industrial products such as water paints, coating solutions for paper, high polymer latexes, pulps for paper making, sizing agents, leather, metal working fluids, etc.

Hitherto, organometallic compounds, organochlorine compounds, organosulfur compounds, quaternary ammonium salt compounds, etc. have been used as chemicals for controlling or preventing the growth of harmful microorganisms in the above-mentioned water systems or industrial products. However, these compounds have toxicity for human being and furthermore cause undesired phenomena such as bad smell or offensive smell and foaming. In addition, the water systems containing these compounds, when discharged to rivers or sea, has bad influence on fishes and shells which causes problems in environmental protection.

## GIST OF THE INVENTION

As a result of the inventors' intensive researches on antimicrobial composition in an attempt to remove the above-mentioned defects, this invention has been accomplished.

That is, this invention relates to an antimicrobial composition which comprises 3,3,4,4-tetrachlorotetrahydrothiophene-1,1-dioxide and at least one cyanoacetamide compound represented by the following formula (I),

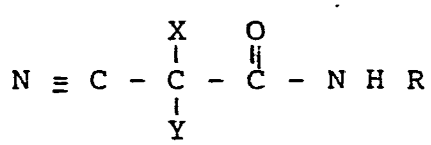

(I)

(wherein X is a halogen atom, Y is a halogen atom or a hydrogen atom and R is a hydrogen atom or a lower alkyl group). The lower alkyl group has preferably one to three

carbon atoms and is exemplified by methyl, ethyl and n-propyl.

The compound represented by the formula (I) is an antibacterial and antifungal agent disclosed in Japanese Patent Publication No. 10386/67 and the compound (II) is an antibacterial and antifungal agent disclosed in U. S. Patent No. 2,957,887.

Each of these compounds is not satisfactory as an antimicrobial agent because their antimicrobial effect is limited to some kinds of microorganisms and thus is insufficient and besides the duration of the effect is also insufficient.

The antimicrobial composition of this invention exhibits markedly excellent antimicrobial action which has never been expected from repsective components and moreover has a wide variety of applicable microorganisms irrespective of their kind including harmful fungi, bacteria and yeats.

## DESCRIPTION OF THE INVENTION

As examples of the compounds represented by the formula (I) of this invention, mention may be made of monochlorocyanoacetamide, monobromocyanoacetamide, dichlorocyanoacetamide, dibromocyanoacetamide, N-methyldibromocyanoacetamide, etc.

Two or more of these compounds may be used in combination.

The mixing ratio of the compound represented by the formula (I) and the compound (II) is generally in the range of from 1/10 to 10/1, preferably in the range of from 1/5 to 5/1 (weight ratio). Practically satisfactory effect can be attained with these mixing ratios.

The antimicrobial composition of this invention is basically prepared by homogeneously mixing the two components and optionally below-mentioned adjuvant and is generally used as aqueous solutions, solutions in solvent, emulsifiable concentrates and flowables, etc. The total

active ingredient content of the compound (I) plus the compound (II) relative to the whole composition is usually in the range of from 0.01 to 100%, preferably from 1 to 50% in the weight ratio.

The solvents used here as the adjuvant include water, alcohol solvents, ketone solvents, ether solvents, hydrocarbon solvents, etc. Among them, alcohols of 1 to 6 carbon atoms such as methyl alcohol, ethyl alcohol, ethylene glycol etc., ketons of 1 to 6 carbon atoms such as acetone, methyl ethyl ketone, etc., ethers of 2 to 6 carbon atoms such as dioxane, tetrahydrofuran, hydrocarbons of 6 to 20 carbon atoms such as benzene, toluene, xylene, etc. are preferable. Stabilizers, surface active agents (cationic, anionic or nonionic surface active agent), etc. may be added as the adjuvant to the antimicrobial composition of this invention as long as the effects are not inhibited. The adjuvant may be conventional. The antimicrobial composition of this invention may be used by supporting on various other carriers and there are no limitation in mode of application.

Application amount of the antimicrobial composition may vary depending on concentration of microorganisms, but generally 0.01 to 100 ppm in terms of the total concentration of the two active ingredients for water systems in paper and pulp industries and 1 to 500 ppm in terms of the total concentration of the two active ingredients for water paints, sizing agents, leathers, etc. Good antimicrobial effects can be obtained with these amounts.

## EXAMPLES AND COMPARATIVE EXAMPLES

Antimicrobial composition were prepared by mixing the ingredients caccording to the following formulations. Parts used here are all by weight.

EXAMPLE 1

| | | |
|---|---|---|
| Dibromocyanoacetamide | (The compound (I) wherein X and Y are bromine, and R is hydrogen) | 10 parts |
| The compound (II) | | 10 parts |
| Diethylene glycol monomethyl ether | | 77 parts |
| Sorpol 900A (Toho Chemical Co.) | | 3 parts |

EXAMPLE 2

| | |
|---|---|
| Monobromocyanoacetamide | 10 parts |
| The compound (II) | 10 parts |
| Diethylene glycol monomethyl ether | 77 parts |
| Sorpol 900A | 3 parts |

EXAMPLE 3

| | |
|---|---|
| Dibromocyanoacetamide | 15 parts |
| The compound (II) | 5 parts |
| Diethylene glycol monomethyl ether | 77 parts |
| Sorpol 900A | 3 parts |

EXAMPLE 4

| | |
|---|---|
| Monobromocyanoacetamide | 15 parts |
| The compound (II) | 5 parts |
| Diethylene glycol monomethyl ether | 77 parts |
| Sorpol 900A | 3 parts |

COMPARATIVE EXAMPLE 1 [only the compound (II) as the active ingredient]

| | |
|---|---|
| The compound (II) | 20 parts |
| Diethylene glycol monomethyl ether | 77 parts |
| Sorpol 900A | 3 parts |

COMPARATIVE EXAMPLE 2 [only the compound of the formula (I) as the active ingredient]

| | |
|---|---|
| Monobromocyanoacetamide | 20 parts |
| Diethylene glycol monomethyl ether | 77 parts |
| Sorpol 900A | 3 parts |

COMPARATIVE EXAMPLE 3 [only the compound of the formula (I) as the active ingredient]

| | |
|---|---|
| Dibromocyanoacetamide | 20 parts |
| Diethylene glycol monomethyl ether | 77 parts |
| Sorpol 900A | 3 parts |

COMPARATIVE EXAMPLE 4 [only the compound (II) as the active ingredient]

| | |
|---|---|
| 2-Bromo-2-nitro-1,3-propanediol | 10 parts |
| The compound (II) | 10 parts |
| Diethylene glycol monomethyl ether | 77 parts |
| Sorpol 900A | 3 parts |

(TESTS ON EFFECTS)

Slime controlling effect and antimicrobial effect of the composition prepared in the above EXAMPLES 1-4 and COMPARATIVE EXAMPLES 1-4 were examined by the following test method.

TEST EXAMPLE 1

Tests on inhibition of growth of microorganisms and formation of slime in the effluent of paper making process.

The antimicrobial compositions prepared in the above EXAMPLES 1-4 and COMPARATIVE EXAMPLES 1-3 were added to white water pit in paper making process of a paper making factory thrice a day for 2 hours each for 7 days so that the concentration of the active ingredient or the two active ingredients in water became 20 ppm and the number of the microorganisms (bacteria, fungi, yeasts) in the white water was counted.

The test method was as follows: 10 mℓ of a white water sample was diluted 10 times with sterilized water, and this sample was put in a Petri dish. A dissolved Waksman' agar culture medium was poured into said dish, the content was mixed and set in a flat plate form. The plate was incubated in a thermostat (32 °C) for 2 days and then the microbial colonies formed were subjected to

measurement by a colony counter. Furthermore, the number of paper breakages was counted to confirm the antimicrobial effect.

Table 1

| | The number of microorganisms in white water (/mℓ) | The number of paper breakages (time) |
|---|---|---|
| Example 1 | $\leqq 10^2$ | 0 |
| Example 2 | $\leqq 10^2$ | 0 |
| Example 3 | $\leqq 10^2$ | 0 |
| Example 4 | $3.6 \times 10^2$ | 1 |
| Comparative Example 1 | $5.3 \times 10^5$ | 9 |
| Comparative Example 2 | $8.6 \times 10^3$ | 6 |
| Comparative Example 3 | $3.5 \times 10^3$ | 5 |
| Comparative Example 4 | $5.2 \times 10^4$ | 3 |
| No agent | $\geqq 10^8$ | 15 |

It will be recognized from Table 1 that the antimicrobial compositions of this invention (EXAMPLES 1-4) had superior inhibitory action against slime forming microorganisms.

TEST EXAMPLE 2

Test on inhibition of growth of in coating color solution for paper making.

To a starch coating color solution of pH 10.0 were added a bouillon liquid medium and previously putrefied coating color solution and this was stirred. Then, the antimicrobial compositions prepared herein above were added at a concentration of 300 ppm of the active ingredient or the two active ingredients.

These samples were put in a thermostat at 32 °C for 5 days and thereafter, the number of surviving

microorganisms (bacteria, fungi, yeasts) in each coating solution was counted. The results are shown in Table 2.

Table 2

| | The number of surviving microorganisms (/mℓ) |
|---|---|
| Example 1 | ≦ $10^2$ |
| Example 2 | $3.0 \times 10^2$ |
| Example 3 | ≦ $10^2$ |
| Example 4 | $2.6 \times 10^2$ |
| Comparative Example 1 | $5.6 \times 10^5$ |
| Comparative Example 2 | $3.5 \times 10^3$ |
| Comparative Example 3 | $3.8 \times 10^3$ |
| Comparative Example 4 | $3.2 \times 10^3$ |
| No agent | $8.0 \times 10^8$ |

CLAIMS

1. An antimicrobial composition which comprises (a) 3,3,4,4-tetrachlorotetrahydrothiophene-1,1-dioxide and (b) at least one cyanoacetamide compound of formula (I):

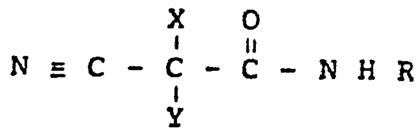

(I)

wherein X is halogen, Y is halogen or hydrogen and R is hydrogen or lower alkyl.

2. An antimicrobial composition according to Claim 1 wherein (b) is selected from monochlorocyanoacetamide, monobromocyanoacetamide, dichlorocyanoacetamide, dibromocyanoacetamide and N-methyldibromocyanoacetamide.

3. An antimicrobial composition according to Claim 1 or 2 wherein the weight ratio of (a)/(b) is from 1/10 to 10/1.

4. An antimicrobial composition according to Claim 3 wherein the weight ratio of (a)/(b) is from 1/5 to 5/1.

5. An antimicrobial composition which comprises 3,3,4,4-tetrachlorotetrahydrothiophene-1,1-dioxide and (b) dibromocyanoacetamide.

6. Use of an antimicrobial composition as claimed in any one of the preceding claims in the treatment of industrial water systems.